# EUROPEAN PATENT APPLICATION

(11) **EP 1 716 759 A1**
(43) Date of publication of application: **02.11.2006**
(21) Application number: 05726525.8
(22) Date of filing: 15.02.2005
(51) Int. Cl.: A23G 1/00

(54) **WATER-CONTAINING CHOCOLATES AND CHOCOLATES USABLE AS STARTING MATERIALS THEREOF**

(30) Priority: 20.02.2004 JP 2004044828
(71) Applicant: Fuji Oil Company, Ltd., Osaka-shi, Osaka 542-0086 (JP)
(72) Inventor: HARADA, Eriko, c/o Fuji Oil Company, Limited, TsukUba-gun, Ibaraki 3002436 (JP); MORIKAWA, Kazutoshi, c/o Fuji Oil Company, Limited, Tsukuba-gun, Ibaraki 3002436 (JP)
(74) Representative: Hayes, Adrian Chetwynd
(86) International application number: PCT/JP2005/002267
(87) International publication number: WO 2005/079592

(57) **Abstract**

[PROBLEMS]

To provide water-containing chocolates produced by kneading chocolates together with water or an aqueous material, which little harden immediately after the production or during storage with the passage of time, or which contain an increased amount of such a material that inherently has a favorable taste but can be used only in a limited amount because of easily hardening; and chocolates usable as starting materials thereof.

[MEANS FOR SOLVING PROBLEMS]

Water-containing chocolates produced by kneading chocolates having a lecithin content of 0.2% by weight or less (i.e., being smaller than the content in usual chocolates) or preferably containing little lecithin, together with water or an aqueous material, or water-containing chocolates containing 0.2% by weight or less, or preferably containing little lecithin would scarcely harden with the passage of time.

## Description

### Technical Field

The present invention relates to water-containing chocolate produced by kneading chocolate together with water or an aqueous material, which little harden immediately after the production or during storage with the passage of time, or which contains an increased amount of such a material for improving a favorable taste that can be used only in a limited amount because of easily hardening, and chocolate usable as a starting material thereof.

### Background Art

There has hitherto been food called water-containing chocolate produced by kneading chocolate together with water or cream. This water-containing chocolate has been conventionally used in various applications. In general, it includes food products such as ganache and fresh chocolate (fresh cream-containing chocolate), which are greatly in demand in the market with recent increased diversity in tastes.

In the water-containing chocolate, especially fresh chocolate, when an amount of cacao is increased so as to meet the requirement prescribed in Japanese "Fresh Chocolate Standards", chocolate taste becomes rich, but the chocolate hardens remarkably, thus resulting in limited uses. In particular, fresh chocolate tends to easily harden when it is marketed at ordinary temperature because the rate of demulsification is easily enhanced, and thus the amount of cacao to be admixed is restricted. In water-containing chocolate, therefore, a method for increasing a degree of freedom in hardness, even if a large amount of cacao is contained, is important from the viewpoint that water-containing chocolate is applied as a material to various food products, and there is a great demand in the market for such a method.

Various ideas for controlling the hardness of chocolate itself have been proposed for many years, but the hardness of water-containing chocolate cannot be sufficiently controlled by simply controlling the physical properties of fats and oils.

For controlling the physical properties of water-containing chocolate, in a method which has been proposed, SOS type fats and oils, and hydrogenated cottonseed oil are incorporated into water-containing chocolate, which is inherently unstable in the state of an emulsion and thus has a poor workability, as fat components so that the chocolate becomes a stable emulsion state, is excellent in workability, and has wide in application range (see, for example, JP 2000-139352 A, pages 1 to 5).

The method, however, utilizes a water-in-oil type, and is silent on functions in an oil-in-water type.

Further, there has been proposed an oil-in-water emulsion comprising as a fat component fats and oils containing 25 to 70% by weight of SUS type triglycerides based on all the fats and oils, and having an SFC (Solid Fat Content) of 50% or more at 10°C and 20% or more at 20°C, which is prevented from increase in viscosity and increase in consistency called "bote" after whipping, and a production process thereof (see, for example, JP 11-196802 A, pages 1 to 8).

However, the invention is directed to functions after whipping, and the fat composition used therein is restricted.

Furthermore, another method has bee proposed for providing water-containing chocolate having excellent workability, which is free from a rough mouthfeel and viscosity increase due to agglomeration of solid matters, while it is not expressed as hardness (see, for example, JP 8-070776 A, pages 1 to 8).

According to this invention, however, it is necessary to add a specific amount of a fractionated lecithin having a phospholipid content of 60% by weight or more and a phosphatidyl choline content of 50% by weight or more based on all the phospholipids, which cannot be said to be a method for controlling the hardness by using easily available materials.

In addition, there are some inventions aiming at stabilizing quality of water-containing chocolate, but there has been no invention in which water-containing chocolate hardly hardens immediately after the production thereof or development of hardness can be inhibited or delayed during storage with the passage of time, by using an easily applicable method.

### Disclosure of the Invention

### Problem to be solved by the Invention

An object of the present invention is to provide water-containing chocolate produced by kneading chocolate together with water or an aqueous material, which little hardens immediately after the production or during storage with the passage of time, or which contains an increased amount of such a material that inherently has a favorable taste but can be used only in a limited amount because of easily hardening; and chocolate usable as a starting material thereof.

### Means for solving the Problems

As a result of the present inventors' intensive studies to achieve the above-mentioned object, they have found that water-containing chocolate produced by kneading chocolate (anhydrous) having a lecithin content of 0.2% by weight or less (i.e., being smaller than the content in usual chocolate) or preferably containing little lecithin, together with water or an aqueous material, or water-containing chocolate (hydrous) having a lecithin content of 0.2% by weight or less, or preferably containing little lecithin would scarcely harden with the passage of time. Thus, the present invention has been completed.

That is, the present invention provides:
(1) Chocolate to be used as a starting material, i.e., starting material chocolate, which is used in an aqueous or hydrous state, and has a lecithin content of 0.2% by weight or less;
(2) Water-containing chocolate which has a lecithin content of 0.2% by weight or less; and
(3) The water-containing chocolate of (2), which is characterized by using the chocolate to be used as a starting material of (1).

### Effects of the Invention

According to the present invention, water-containing chocolate which little hardens immediately after the production or during storage with the passage of time, or which contains an increased amount of such a material that inherently has a favorable taste but can be used only in a limited amount because of easily hardening; and starting material chocolate thereof can be obtained in an easily applicable manner.

In addition, the present invention has an advantage that water-containing chocolate and starting material chocolate thereof, which prevent lowering of a favorable taste due to an emulsifier, can be easily obtained by decreasing an amount of the emulsifier which has to be added in many conventional manners.

### Best Mode for Carrying Out the Invention

"Chocolate" used herein may include "pure chocolate" "chocolate", and "semi-chocolate", which are defined by Japan Chocolate Fair Trade Council, and "chocolate-like food products" comprising fats and oils other than cocoa butter and edibles other than cocoa solid matter, and in addition, general fat- and oil-based food products in which edibles are dispersed, such as curry-flavored or cheese-flavored food products.

Also, "water-containing chocolate" used herein may include, in addition to "fresh chocolate" defined in Fresh Chocolate Code, all of food products produced by kneading the chocolate mentioned above together with an aqueous component. "Chocolate" used for producing water-containing chocolate refers to "starting material chocolate for the use in an aqueous or hydrous state" or "starting material chocolate".

Water-containing chocolate is generally in the state of an O/W type emulsion, a W/O type emulsion, a double emulsion combining respective emulsions, a partly phase-inverted emulsion is inversed, or the like. Although there is no particular limitation in the present invention, more preferred is an emulsion wherein a continuous aqueous phase largely occupies such as an O/W type emulsion or a partly phase inverted O/W type emulsion.

Starting materials used for producing the chocolate are not particularly limited and known compositions are suitably employed except that the amount of lecithin used is reduced. As one example, additives other than lecithin, milk component, sugars, fats and oils, and any edibles may be appropriately combined.

Examples of the additive include emulsifiers, anti-oxidizing agents, flavors and the like. The additives other than lecithin are not particularly limited in kinds and amounts, or may not be added.

Lecithin is added in an amount as small as possible in the range of 0.2% or less, preferably 0.1% or less, and most preferably no lecithin is added. When the amount of lecithin added is reduced, viscosity of chocolate-like food products is apt to increase or a high-consistency state called "bote" is apt be exhibited, and therefore, emulsifiers having an effect for decreasing viscosity can be appropriately used from the viewpoint of workability.

For example, in general, when an emulsifier having a relatively higher HLB is added, demulsification tends to be inhibited, and an emulsifier having a HLB of 7 or more is generally preferred. On the other hand, in case of using for whipping, etc., when an emulsifier having an extremely high HLB is added, foaming power may be sometimes lowered. Water-containing chocolate can be produced even if a specific emulsifier is not used, and so no emulsifier may be used.

As mentioned above, in the present invention, an emulsifier to be added is not particularly limited except for the amount of lecithin added, and therefore may be appropriately used by taking the kind, amount and addition manner of the emulsifier used in conventional water-containing chocolate into consideration according to a particular application.

Examples of the emulsifier include phospholipids such as phosphatidylcholine, etc.; glycerin fatty acid esters such as monoglycerides and diglycerides; partial glycerides of organic acids such as acetic acid and fatty acid esters of glycerol, lactic acid and fatty acid esters of glycerol, succinic acid and fatty acid esters of glycerol, diacetyltartaric acid and fatty acid esters of glycerol, etc.; sorbitan fatty acid esters; sucrose fatty acid esters; sucrose acetate isobutyrate; polyglycerine fatty acid esters; polyglycerol condensed ricinoleic acid esters; propylene glycol fatty acid esters; calcium stearoyl lactate; sodium stearoyl lactate; polyoxyethlene sorbitan monostearate; polyoxyethlene sorbitan monoglyceride; and the like. These emulsifiers may be used alone or in combination thereof. Further, an emulsifier having the above-mentioned effect for preventing "bote" and providing hydrous function may be used together.

Examples of the milk component include whole milk powder, skim milk powder, butter milk powder, whey, whey powder, casein, sodium caseinate, lactalbumin, cheese powder, and the like.

As a sugar, according to an existing technique, liquid sugar is admixed in order to make chocolate soft, and a sugar having lower molecular weight such as reduced glucose syrup of a monosaccharide is used in order to lower wateractivity to keep a product for longer time. In the present invention, a sugar is used without any limitations in a kind and an amount, and may be appropriately used by taking a particular kind, amount and addition manner of a sugar used for conventional water-containing chocolate into consideration according to a particular application.

Examples of the sugar include, glucose, fructose, sucrose, maltose, enzymatic saccharified starch syrup, lactose, reduced glucose syrup, isomerized glucose syrup, sucrose binding starch syrup, oligosaccharides, reduced sugar polydextrose, sorbitol, reduced lactose, trehalose, xylose, xylitol, maltitol, erythritol, mannitol, fructo oligosaccharide, soybean oligosaccharide, galactooligosaccharide, lactosucrose, raffinose, lactulose, palatinose oligosaccharide, stevia, aspartame, sugar alcohols, and the like. The sugars can be used alone or in combination with two or more thereof.

The fats and oils include animal and vegetable fats and oils, their hydrogenated fats and oils, mixtures of two ore more thereof, and processed fats and oils treated with various chemical or physical treatments. The fats and oils are not particularly limited, and examples thereof include, various animal and vegetable fats and oils such as soybean oil, cottonseed oil, corn oil, safflower oil, olive oil, palm oil, rapeseed oil, rice bran oil, sesame oil, kapoc oil, cocoanut oil, palm kernel oil, cacao butter, milk fat, lard, fish oil, whale oil, and the like, and their processed oils such as hydrogenated fats and oils, fractionated oils, interesterified oils, and the like.

Existing water-containing chocolate to which lecithin is added tends to harden by using fats and oils containing a large amount of tempering type, symmetric triacyl glycerols. In such a case, the restriction of an amount of lecithin added is particularly effective.

As mentioned above, in the present invention, the fats and oils may be appropriately used according to kinds, amounts and addition manner thereof used for conventional water-containing chocolate according to a particular application. In particular, tempering type fats and oils can be freely used in an amount larger than conventional ones.

Other components used in the chocolate can include various flavor materials and seasoning powder such as cacao mass, cocoa powder, fruit powder, fruit juice powder, coffee powder, tea powder, curry powder and spices; and edibles such as soybean milk powder, starch, and the like.

The chocolate of the present invention can be, as mentioned above, a chocolate mix produced by using starting materials used for ordinary chocolate-like food products according to a conventional chocolate production process.

Although an oil content of the chocolate mix is not particularly limited as long as chocolate can be produced, it is difficult to obtain chocolate by a conventional manner such as refining with rolls, when the oil content of a chocolate mix is less than 26% by weight.

Finally, while the above-mentioned chocolate mix of the starting material chocolate is mixed with an aqueous component to give water-containing chocolate, it is also possible to market the chocolate mix without an aqueous component, and the mixing is conducted at a final stage to give water-containing chocolate.

The mixing of the starting material chocolate and an aqueous component can be conducted according to an existing method generally applicable to the production of water-containing chocolate, and the amounts and mixing manner are not particularly limited. In the existing water-containing chocolate, a content of the starting material chocolate is about 10% to about 80%, more preferably about 30% to about 50%, which can be applied to the present invention.

As described with respect to fats and oils in the above, if the content of tempering type fats and oils in conventional water-containing chocolate is high, the resulting chocolate becomes hard, thus necessarily leading to limited amount of a starting material chocolate of tempering type fats and oils. However, in the present invention, tempering type fats and oils or chocolate containing tempering type fats and oils can be used in a higher content. Although the upper limit in the content of tempering type fats and oils is not limited, it is possible to use about 50% of tempering type fats and oils based on the water-containing chocolate, or the tempering type starting material chocolate corresponding to the same content.

The lecithin content of the resulting water-containing chocolate should be 2% or less and, preferably, the lecithin content of the aqueous component per se should also be as small as possible, more preferably without lecithin.

The resulting water-containing chocolate may be used alone, or may be mixed with existing water-containing chocolate, fresh cream, or oil in water type emulsions such as filled cream wherein milk fat is replaced with other fats and oils. Further, a mixture can be subjected to mechanical processing such as whipping, and the like.

### Examples

The present invention will be illustrated in more detailed by means of Examples but the spirit of the present invention is not limited thereto. In Examples, all percents and parts are by weight.

### Example 1

Cacao mass and sugar are mixed according to Table 1, and starting material chocolate is produced according to a conventional manner. Then, all of fresh cream (trade name: HIGH FRESH NM manufactured by Fuji Oil Company, Limited), water, fructose-glucose liquid sugar (trade name: HIGH FRUCTO M-75 manufactured by Nippon Corn Starch Corporation), and an emulsifier (brand name: RYOTO SUGAR ESTER S-570 manufactured by Mitsubishi-Kagaku Foods Corporation) are mixed and the mixture is warmed to 30°C, to which the starting material chocolate obtained above and malt sugar (trade name: SUNMALT-SHIRO manufactured by Hayashibara Co., Ltd.) are added in the amounts as shown in Table 1.

The above-mentioned mixture was stirred at 3000 rpm with a homomixer (T.K HOMODISPER made by Tokushu Kika Kogyo Co., Ltd.) while warming, which was held at 65°C for 30 minutes and then cooled at 5°C to obtain water-containing chocolate in the form of an 0/W type emulsion.

### Comparative Example 1

Starting material chocolate and then water-containing chocolate were produced according to the same conventional manner and amounts as those in Example 1 except that lecithin was added to the starting material chocolate.

### Comparative Example 2

Starting material chocolate and then water-containing chocolate were produced according to the same conventional manner and amounts as those in Example 1 except that lecithin was added to the starting material chocolate and then an emulsifier (trade name: RYOTO SUGAR ESTER S-1670 manufactured by Mitsubishi-Kagaku Foods Corporation) was added to the aqueous phase of the emulsion.

The thus obtained emulsions were compared to each other with respect to hardness. The results are shown in Table 2.

**Table 1**

| | Example 1 | Comparative Example 1 | Comparative Example 2 |
|---|---|---|---|
| <composition of starting material chocolate> | | | |
| cacao mass | 30.0 | 30.0 | 30.0 |
| sugar | 20.0 | 20.0 | 20.0 |
| lecithin | | 0.5 | 0.5 |

| <composition of water-containing chocolate> | | | |
|---|---|---|---|
| the above-mentioned starting material chocolate | 50.0 | 50.0 | 50.0 |
| malt sugar | 10.0 | 10.0 | 10.0 |
| fresh cream | 10.0 | 10.0 | 10.0 |
| fructose-glucose liquid sugar | 10.0 | 10.0 | 10.0 |
| water | 20.0 | 20.0 | 20.0 |
| Ester S 570 | 0.2 | 0.2 | 0.2 |
| Ester S 1670 | | | 0.05 |

**Table 2**

| | Example 1 | Comparative Example 1 | Comparative Example 2 |
|---|---|---|---|
| immediately after cooling | 78 | 370 | 310 |
| after one week | 100 | 430 | 400 |

The hardness was measured at 5°C with a rheometer (manufactured by Fudoh Kogyo Co., Ltd.) with a plunger of 1 cm diameter. Unit: (g).

In Example 1, soft and smooth water-containing chocolate having good meltability in the mouth could be obtained after cooling. In Comparative Example 1, the obtained chocolate had a hard mouthfeel after cooling, and in Comparative Example 2, softness of the obtained chocolate was inferior to that of Example 1, though the emulsifier having a high HLB was added. Further, in Comparative Examples 1 and 2, the chocolate hardened more as the demulsification progressed, lost the gloss, and became to have an oily mouthfeel after one week. On the other hand, in Example 1, the chocolate kept the good softness and smoothness.

### Examples 2, 3, 4 and 5

Cacao mass and sugar are mixed according to Table 3, and starting material chocolate is produced according to a conventional manner. Then, the resulting starting material chocolate, sugar, fresh cream, reduced starch syrup, etc. are added to a mixture of fresh cream (trade name: HIGH FRESH NM manufactured by Fuji Oil Company, Limited), water, reduced starch syrup (trade name: AMAMEAL manufactured by Towa Chemical Industry Co., Ltd.) and an emulsifier (trade name: RYOTO SUGAR ESTER S-570 made by Mitsubishi-Kagaku Foods Corporation) warmed to 30°C in the amounts as shown in Table 3, followed by mixing.

The resulting mixture was stirred at 3000 rpm with a homomixer (T. K. HOMODISPER manufactured by Tokushu Kika Kogyo Kabushiki Kaisha) while warming, which was held at 65°C for 30 minutes and cooled to 5°C to obtain water-containing chocolate in the form of an O/W type emulsifier.

### Comparative Example 3

Lecithin was added to the starting material chocolate of Example 1 to prepare starting material chocolate according to a conventional manner, and then water-containing chocolate was produced according to the same manner.

The thus obtained chocolates were compared to each other with respect to hardness. The results are shown in Table 4.

**Table 3**

| | Example 2 | Example 3 | Example 4 | Example 5 | Comparative Example 3 |
|---|---|---|---|---|---|
| <composition of starting material chocolate> | | | | | |
| cacao mass | 51.0 | 51.0 | 51.0 | 51.0 | 51.0 |
| sugar | 49.0 | 49.0 | 49.0 | 49.0 | 49.0 |
| lecithin | | | | | 0.5 |

| <composition of water-containing chocolate> | | | | | |
|---|---|---|---|---|---|
| the above-mentioned starting material chocolate | 45.0 | 50.0 | 60.0 | 70.0 | 45.0 |
| sugar | 15.0 | 10.0 | | | 15.0 |
| fresh cream | 10.0 | 10.0 | 10.0 | 10.0 | 10.0 |
| reduced starch syrup | 10.0 | 10.0 | 10.0 | 10.0 | 10.0 |
| water | 20.0 | 20.0 | 20.0 | 20.0 | 20.0 |
| emulsifier | 0.2 | 0.2 | 0.2 | 0.2 | 0.2 |

**Table 4**

| | Example 2 | Example 3 | Example 4 | Example 5 | Comparative Example 3 |
|---|---|---|---|---|---|
| immediately after cooling | 11 | 22 | 85 | 240 | 210 |

The hardness was measured at 5°C with a rheometer (manufactured by Fudoh Kogyo Co., Ltd.) with a plunger of 1 cm diameter. Unit: (g).

As one use of water-containing chocolate, the chocolate is used for the purpose of "kneading it into" whipping cream, margarine, dough for baked confectionery, etc. When water-containing chocolate is used for this purpose, the chocolate having hardness of 250 g or less as measured with a rheometer is preferred from the viewpoint of workability.

When using conventional water-containing chocolate containing lecithin for this purpose so as to enhance a chocolate flavor, the amount of water-containing chocolate to be kneaded into was at most about 45% in terms of a chocolate component due to the inevitable increase in hardness. On the other hand, in case of the water-containing chocolate of the present invention which contained no lecithin, it was possible to use the chocolate in an amount of at most about 70% in terms of a chocolate component.

While the water-containing chocolate of Example 5 was as hard as the chocolate of Comparative Example 3, the former chocolate was rich in a chocolate flavor, and had very high commercial value.

### Example 6

Whole milk powder, sugar, malt sugar, cocoa butter as vegetable oil, and vanillin were mixed according to Table 5, and starting material chocolate was produced according to a conventional manner. Then, the resulting starting material chocolate was added to a mixture of water, fresh cream (trade name: HIGH FRESH NM manufactured by Fuji Oil Company, Limited), reduced starch syrup (trade name: AMAMEAL manufactured by Towa Chemical Industry Co., Ltd.), ESTER S 570 (trade name: RYOTO SUGAR ESTER S-570), and ESTER S 1570 (trade name: RYOTO SUGAR ESTER S-1670 manufactured by Mitsubishi-Kagaku Foods Corporation) warmed to 30°C in the amounts as shown in Table 5, followed by mixing.

The starting material chocolate obtained above was stirred at 3000 rpm with a homomixer (T. K. HOMODISPER manufactured by Tokushu Kika Kogyo Co., Ltd.) while warming, held at 80°C for 15 minutes and cooled to obtain water-containing chocolate.

### Comparative Example 4

Starting material chocolate and then water-containing chocolate were produced according to the same conventional manner and composition as those in Example 6 except that lecithin was contained in the starting material chocolate.

Using the thus obtained emulsions, storage test in which temperature conditions were changed was conducted, and the emulsions were compared with respect to hardness. The results are shown in Table 6.

**Table 5**

| | Example 6 | Comparative Example 4 |
|---|---|---|
| <composition of starting material chocolate> | | |
| whole milk powder | 18.9 | 18.9 |
| sugar | 46.0 | 46.0 |
| cocoa butter | 21.1 | 21.1 |
| malt sugar | 14.0 | 14.0 |
| vanillin | 0.04 | 0.04 |
| lecithin | | 0.5 |

| <composition of water-containing chocolate> | | |
|---|---|---|
| the above-mentioned starting material chocolate | 60.5 | 60.5 |
| fresh cream | 10.1 | 10.1 |
| reduced starch syrup | 19.0 | 19.0 |
| water | 8.4 | 8.4 |
| ESTER S 1670 | 0.5 | 0.5 |
| ESTER S 570 | 0.2 | 0.2 |

**Table 6**

| Example 6 | | Comparative Example 4 | | | | | |
|---|---|---|---|---|---|---|---|
| | | 5°C | 15°C | 20°C | 5°C | 15°C | 20°C |
| immediately after cooling | | 325P | 150P | 65P | 600P | 600P | 90P |
| after month | one | 390P | 185P | 85P | 840P | 720P | 520P |
| after months | 3 | 400P | 175P | 90P | | | |
| after months | 6 | 410P | 180P | 90P | | | |

The viscosity was determined at 12 r.p.m. or 6 r.p.m. at each temperature by using No. 4 rotor of BM type viscometer (manufactured by Tokimec Inc.) as a parameter of hardness. Unit: (P) (poise)

As one use of water-containing chocolate, the chocolate is used for the purpose of so-called "sauce" in the state of a fluid. When water-containing chocolate is used for this purpose, it is desirable that the chocolate maintains its fluid state even after cooling and after long storage. However, when a chocolate component is increased, the increase in hardness was inevitable, and water-containing chocolate tends to exhibit the remarkable increase in harness with the passage of time, when marketing it at ordinary temperature.

In Example 6, the water-containing chocolate had fluidity after cooling and further it maintained the fluidity as well as gloss even after 6-month storage.

On the other hand, in Comparative Example 4, although the water-containing chocolate had fluidity after cooling, it was slightly hard, and lost both gloss and fluidity after 6 months. Thus, commercial value was damaged.

### Example 7

Whole milk powder, sugar, temper-type hard butter as vegetable oil (trade name: MELANO NEW SS-5 manufactured by Fuji Oil Company Limited) and lecithin were are mixed according to Table 7, and starting material white chocolate is produced according to a conventional manner.

Then, the starting material chocolate was added to a mixture of fresh cream (trade name: HIGH FRESH NM manufactured by Fuji Oil Company, Limited), 3-fold concentrated milk-type food (trade name: PROBEST 400F manufactured by Fuji Oil Company, Limited), water and an emulsifier (trade name: RYOTO SUGAR ESTER S-570 manufactured by Mitsubishi-Kagaku Foods Corporation, HLB 5), warmed to 30°C in the amounts as shown in Table 7, followed by mixing.

The mixture was stirred at 3000 rpm with a homomixer (T. K. HOMODISPER manufactured by Tokushu Kika Kogyo Co., Ltd.) while warming, held at 65°C for 30 minutes and cooled to obtain water-containing chocolate.

The thus obtained water-containing chocolate and milk were mixed in a ratio of 80:20, and the mixture was whipped with a vertical mixer (HOBART MIXER N-50 manufactured by HOBART (Japan) K.K.).

### Comparative Example 5

According to Table 7, starting material chocolate was produced so that an amount of lecithin was larger than that of Example 7, and water-containing chocolate was obtained according to the same manner as that of Example 7.

The thus obtained emulsion and milk were mixed in a ratio of 80:20, and the mixture was whipped with a vertical mixer (HOBART MIXER N-50 made by HOBART (Japan) K.K.).

**Table 7**

| | Example 7 | Comparative Example 5 |
|---|---|---|
| <composition of starting material chocolate> | | |
| whole milk powder | 15.9 | 15.9 |
| sugar | 38.7 | 38.7 |
| vegetable oil | 45.4 | 45.4 |
| lecithin | 0.1 | 0.5 |

| <composition of water-containing chocolate> | | |
|---|---|---|
| the above-mentioned starting material chocolate | 70.0 | 70.0 |
| fresh cream | 13.0 | 13.0 |
| 3-fold concentrated food product | 7.0 | 7.0 |
| water | 9.0 | 9.0 |
| western liquor | 1.0 | 1.0 |
| emulsifier | 0.2 | 0.2 |

| <composition of the final product> | | |
|---|---|---|
| the above-mentioned water-containing chocolate | 80.0 | 80.0 |
| milk | 20.0 | 20.0 |

The hardness of the thus obtained emulsions as well as workability, heat resistant shape-retention and heat resistant syneresis resistance in the production of a whipped composition were evaluated as described below. The results are shown in Table 8.

**Table 8**

| | Example 7 | Comparative Example 5 |
|---|---|---|
| <hardness of emulsion> | | |
| immediately after cooling | 20 | 165 |

| <whipped composition> | | |
|---|---|---|
| workability | 5 | 2 |
| heat resistant shape-retention | 5 | 5 |
| heat resistant syneresis resistance | 5 | 5 |

The hardness was measured at each temperature with a rheometer (manufactured by Fudoh Kogyo Co., Ltd.) using a plunger of 1 cm diameter of 1 cm. Unit: (g)

### Evaluation method

Workability: The duration of a state suitable for napping or squeezing while whipping, and further the duration of such a soft state as that suitable for napping or squeezing after completion of whipping.
Heat resistant shape-retention: The degree of shape-retention of a flower-shaped decoration made by squeezing whipped cream from a squeeze bag after allowing to stand in an incubator at 20°C for 20 hours.
Heat resistant syneresis resistance: The degree of syneresis of a flower-shaped decoration made by squeezing whipped cream from a squeeze bag after allowing to stand in an incubator at 20°C for 20 hours.

The evaluation is conducted by scoring one to five points wherein, in case of the workability, point 5 is good and point 1 is bad, and point 2 or less is evaluated as difficult workability. In case of heat resistant shape-retention and heat resistant syneresis resistance, point 5 is good and point 1 is bad, and the point 2 or less is estimated to be no commercial value.

The emulsion obtained in Example 7 was soft after cooling and thus was easy to use. Also the workability upon whipping was good.

The chocolate obtained in Comparative Example 5 was hard. Therefore, the chocolate was difficult to take out of a package, and was difficult to mix with milk. The workability on whipping was very bad. Then, while the chocolate could be squeezed and there was no problem in heat resistant shape-retention and heat resistant syneresis resistance immediately after whipping, a state suitable for squeezing was hardly maintained and the chocolate became hard and an unusable state soon. Therefore, the chocolate was difficult to use.

## Claims

1. Chocolate to be used as a starting material which is used in an aqueous or hydrous state, and has a lecithin content of 0.2% by weight or less.

2. Water-containing chocolate which has a lecithin content of 0.2% by weight or less.

3. The water-containing chocolate of claim 2, which is **characterized by** using the chocolate to be used as a starting material of claim 1.
